# EUROPEAN PATENT SPECIFICATION

(11) **EP 2 339 250 B1**
(45) Date of publication and mention of the grant of the patent: **21.05.2014**
(21) Application number: 10195221.6
(22) Date of filing: 15.12.2010
(51) Int. Cl.: F24F 1/00, F24F 11/00

(54) **Air conditioner**
Klimaanlage
Climatiseur

(30) Priority: 28.12.2009 KR 20090131936
(43) Date of publication of application: 29.06.2011
(73) Proprietor: LG Electronics Inc., Yeongdeungpo-gu Seoul 150-721 (KR)
(72) Inventor: Lee, Juyoun, 153-802, SEOUL (KR); Jang, Jaedong, 153-802, SEOUL (KR); Woo, Suchang, 153-802, SEOUL (KR)
(74) Representative: Cabinet Plasseraud

(56) References cited:
- EP-A1- 1 686 324
- EP-A1- 1 686 327
- WO-A2-2009/057869
- US-A- 5 187 949
- US-A1- 2006 086 138

## Description

### BACKGROUND

The present disclosure relates to an air conditioner, and more particularly, to an air conditioner capable of performing concentration cooling in a predetermined concentration cooling space based on a user's selection.

An air conditioner is a home electric appliance that performs air-conditioning, i.e., cooling or/and heating of an indoor space. Components that constitute a heat exchange cycle for cooling/heating of the indoor space are provided to the air conditioner. An air blowing fan and an air-direction control member are also provided to the air conditioner. Here, the air blowing fan blows out cool air and warm air generated by a heat exchange between indoor air and a coolant circulating the heat exchange cycle to the indoor space, and the air-direction control member controls the directions of the cool air and warm air, blew out by the air blowing fan.

In the conventional air conditioner, the cool air and warm air, blew out through an outlet, are controlled to be uniformly reached in the entire indoor space by the air-direction control member. Such air conditioner is disclosed, for example, in W02009/057869A2. However, in a case where a user desires rapid air conditioning, particularly rapid concentration cooling, the user's desire is not sufficiently satisfied.

### SUMMARY

Embodiments provide an air conditioner capable of performing rapid concentration cooling.

Embodiments also provide an air conditioner that enables cool air to be blown out to a predetermined space.

In one embodiment, an air conditioner includes: a cabinet including a heat exchanger configured to exchange heat with indoor air to cool the indoor air for cooling an indoor space; an upper outlet unit disposed on a upper portion of a front side of the cabinet or a top of the cabinet, the upper outlet unit including a first outlet at a front side; and a first air-direction control member configured to control a direction of cool air blown out through the first outlet, wherein in a concentration cooling mode for cooling at least a portion of the indoor space set as a concentration cooling space to a predetermined concentration cooling temperature, the first air-direction control member controls the cool air blown out through the first outlet to be directed to the concentration cooling space, characterized in that the air conditioner further comprises second outlets disposed on both sides of the cabinet and inclined toward a rear side of the cabinet at a predetermined angle from front side of the cabinet; and second air-direction control members configured to control directions of cool air blown out through the second outlets, wherein in the concentration cooling mode, the second air-direction control members control the cool air blown out through the second outlets to be directed toward the concentration cooling space.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view showing an indoor unit in an air conditioner according to a first embodiment.
Fig. 2 is a block diagram showing a configuration of the indoor unit in the air conditioner according to the first embodiment.
Fig. 3 is a side view showing an operational state of cooling in a concentration cooling mode in the air conditioner according to the first embodiment.
Fig. 4 is a side view showing an indoor unit in an air conditioner according to a second embodiment.
Fig. 5 is a plan view showing the indoor unit in the air conditioner according to the second embodiment.
Fig. 6 is a block diagram schematically showing an air conditioner according to a third embodiment.

### DETAILED DESCRIPTION OF THE EMBODIMENTS

Reference will now be made in detail to the embodiments of the present disclosure, examples of which are illustrated in the accompanying drawings.

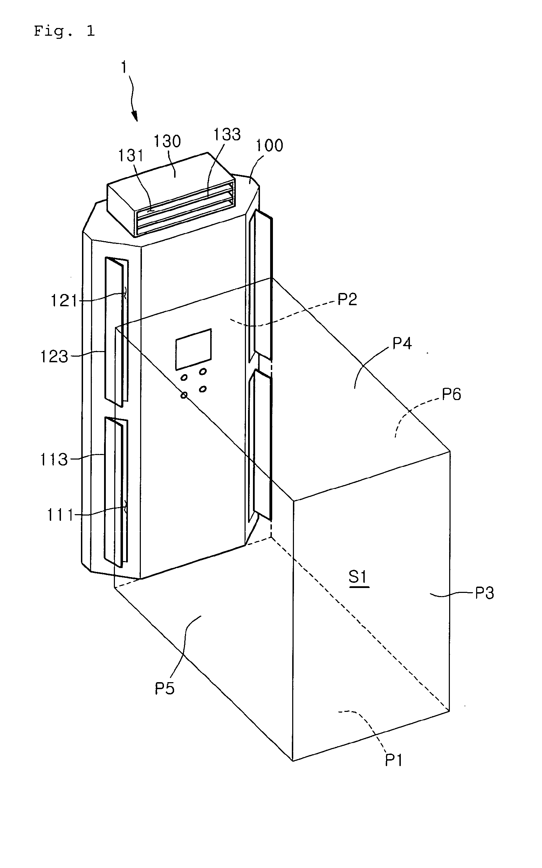

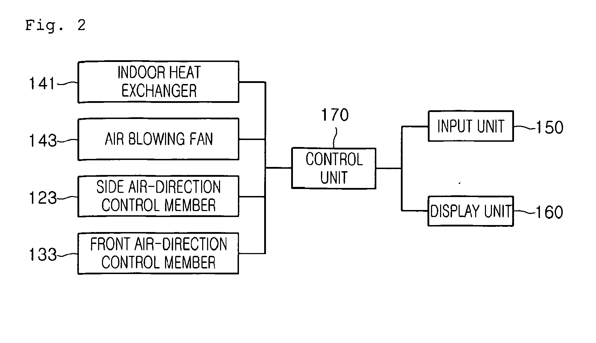

Fig. 1 is a perspective view showing an indoor unit in an air conditioner according to a first embodiment. Fig. 2 is a block diagram schematically showing a configuration of the indoor unit in the air conditioner according to the first embodiment.

Referring to Figs. 1 and 2, a cabinet 100 forms an external appearance of the indoor unit 1 in the air conditioner. The cabinet 100 is formed in the shape of a polyhedron including a front and both sides inclined at a predetermined angle from the front.

Meanwhile, inlets 111 are formed in both the sides of the cabinet 100, respectively. The inlet 111 serves as an entrance through which indoor air is sucked into the interior of the cabinet 100. The inlet 111 is formed by cutting away a lower portion of each of both the sides of the cabinet 100 in the shape of a rectangle that is vertically long.

An inlet opening/closing member 113 is provided on the inlet 111. The inlet opening/closing member 113 selectively opens/closes the inlet 111. The inlet opening/closing member 113 is formed in a shape corresponding to the shape and size of the inlet 111.

Side outlets 121 are formed in both the sides of the cabinet 100, respectively. The side outlet 121 is formed by cutting away an upper portion of each of both the sides of the cabinet 100, corresponding to an upper part of the inlet 111, in the shape of a rectangle that is vertically long. The side outlet 121 serves as an exit through which cool air is blown out into an indoor space.

Side air-direction control members 123 are provided on the side outlets 121, respectively. The side air-direction control member 123 functions to control the direction of the cool air blown out through the side outlet 121. In this embodiment, the side air-direction control member 123 opens/closes the side outlet 121 and controls the direction of the cool air blown out through the side outlet 121 at the same time. It will be apparent that the side air-direction control member 123 does not necessarily open/close the side outlet 121. That is, an opening/closing member for opening/closing the side outlet 121 separately from the side air-direction control member 123.

The side air-direction control member 123 is formed in the shape of a plate having a shape and size approximately corresponding to those of the side outlet 121. The side air-direction control member 123 opens/closes the side outlet 121 by turning its front end in a side direction about its rear end, and controls the direction of the cool air blown out through the side outlet 121 at the same time. Thus, the side air-direction control member 123 can substantially control the direction of the cool air blown out through the side outlet 121 to be directed to the left and right with respect to the front of the cabinet 100.

Meanwhile, an upper outlet unit 130 is mounted on a top of the cabinet 100. The upper outlet unit 130 may be mounted to enter into the inside of the cabinet 100 and to exit to the outside of the cabinet 100. That is, the upper outlet unit 130 is vertically movably mounted on the top of the cabinet 100.

A front outlet 131 is formed at the front of the upper outlet unit 130. The front outlet 131 is a portion through which the cool air is blown out to the indoor space. Thus, the front outlet 131 can be opened/closed according to the entry of the upper outlet unit 130 into the inside of the cabinet 100 and the exit of the upper outlet unit 130 to the outside of the cabinet 100.

A front air-direction control member 133 is provided on the front outlet 131. The front air-direction control member 133 functions to control the direction of the cool air blown out through the front outlet 131. In this embodiment, the front air-direction control member 133 controls the direction of the cool air blown out through the side outlet 121 to be directed to the top and bottom. For example, a plurality of vanes may be used as the front air-direction control member 133.

Meanwhile, a concentration cooling space S1 is set in the front of the cabinet 100. The concentration cooling space S1 refers to a space in which a user can be directly cooled down by the cool air blown out through the side outlets 121 and the front outlet 131. In this embodiment, the concentration cooling space S1 includes a bottom surface P1 (hereinafter, referred to as a 'first plane') on which the cabinet 100 is mounted, a imaginary plane P2 (hereinafter, referred to as a 'second plane') positioned at the front of the cabinet 100, a vertical surface P3 (hereinafter, referred to as a 'third plane') parallel to the front of the cabinet 100 while being spacing apart at a distance of 1.5 m or shorter from the front of the cabinet 100, a horizontal surface P4 (hereinafter, referred to as a 'fourth plane') spaced apart at a distance of 2.0 m or shorter from the bottom surface on which the cabinet 100 is mounted, and imaginary planes P5 and p6 (hereinafter, referred to as 'fifth and sixth planes') perpendicular to the front of the cabinet 100 while being respectively spaced apart at a distance of 0.3 m or shorter from the rear ends of both the sides of the cabinet 100. The third plane P3 may be spaced apart at a distance of 1.2 m from the front of the cabinet 100. The fourth plane P4 is spaced apart at a distance of 1.1 m to 1.8 m from the bottom surface. The fifth and sixth planes P5 and P6 come in contact with the rear ends of both the sides of the cabinet 100, respectively.

Referring to Figs. 1 and 2, the indoor unit 1 includes a plurality of components that constitute a heat exchange cycle, e.g., an indoor heat exchanger 141 and an air blowing fan 143. The indoor heat exchanger 141 and the air blowing fan 143 are mounted in the interior of the cabinet 100. The indoor heat exchanger 141 performed a heat exchange between indoor air and a coolant. Here, the indoor air is sucked into the interior of the cabinet 100 through the inlets 111, and the coolant flows in the interior of the cabinet 100. The air blowing fan 143 sucks the indoor air into the interior of the cabinet 100 through the inlets 111 and forms the flow of air that is heat-exchanged by the indoor heat exchanger 141 and then blown out to the indoor space through the side outlets 121 and the front outlet 131.

The indoor unit 1 further includes an input unit 150, a display unit 160 and a control unit 170. The input unit 150 receives a signal for operation of the indoor unit 1, i.e., cooling of the indoor space. The display unit 160 displays information on the operation of the indoor unit 1. The control unit 170 controls the operation of the indoor unit 1 in response to the signal inputted to the input unit 150.

More specifically, the input unit 150 receives a signal for at least a concentration cooling mode and a general cooling mode. For example, the input unit 150 may receive a signal for start and end of the concentration cooling mode and setup of a predetermined concentration cooling time. The input unit 150 may also receive a signal for start and end of the general cooling mode and setup of general cooling time and temperature.

Here, the concentration cooling mode means that cooling is performed at a predetermined concentration cooling temperature in the concentration cooling space S1. That is, in the concentration cooling mode, the cool air blown out through the side outlets 121 and the front outlet 131 is controlled by the side air-direction control members 123 and the front air-direction member 133 so as to be directed to the concentration cooling space S1. The general cooling mode means that cooling is generally performed in the indoor space. Generally, in the general cooling mode, the cool air blown out through the side outlets 121 and the front outlet 131 is controlled by the side air-direction control members 123 and the front air-direction member 133 so as to be uniformly directed to the entire indoor space. Since the general cooling mode is well-known in the art, its detailed description will be omitted.

The display unit 160 displays various pieces of information related to the concentration cooling mode and the general mode. Particularly, the display unit 160 may display information on the presence of start and end of the concentration cooling mode and remaining time. The display unit 160 may also display information on the presence of start and end of the general cooling mode, remaining time and general cooling temperature.

The control unit 170 controls the operations of the components that constitute the heat exchange cycle, i.e., the indoor heat exchanger 141 and the air blowing fan 143 so that the concentration cooling mode or the general cooling mode is performed in response to the signal inputted to the input unit 150. That is, if the input unit 150 receives a signal for the start of the concentration cooling mode, the control unit 170 controls the indoor unit 1 so that the concentration cooling space S1 is cooled down by the cool air of the concentration cooling temperature. If the input unit 150 receives a signal for the end of the concentration cooling mode or the concentration cooling time elapses, the control unit 170 controls the indoor unit 1 so that the concentration cooling mode is ended. If the concentration cooling mode is ended, the control unit 170 controls the indoor unit 1 so that the general cooling mode is performed.

If the input unit 150 receives a signal for the general cooling mode, the control unit 170 controls the indoor unit 1 in response to the signal so that the indoor space is cooled down. Since the general cooling mode is well-known in the art, its detailed description will be omitted.

In the concentration cooling mode, the control unit 170 controls the side air-direction control members 123 to control the cool air blown out through the side outlets 121 to be directed to the concentration cooling space S1. More specifically, the side air-direction control member 123 controls the cool air blown out through the side outlet 121 to be directed in the front direction of the cabinet 100 at an angle of 90 degrees or less from the front of the cabinet 100. The side air-direction control member 123 may control the cool air blown out through the side outlet 121 to be directed in the front direction of the cabinet at an angle of 90 degrees from the front of the cabinet 100, i.e., while being parallel with the vertical surface perpendicular to the front of the cabinet 100.

In the concentration cooling mode, the control unit 170 controls the front air-direction control member 133 to control the cool air blown out through the front outlet 131 to be directed to the concentration cooling space S1. More specifically, the front air-direction control member 133 controls the cool air blown out through the front outlet 131 so that the cool air flows at an angle of 20 degrees or greater, preferably 20 degrees, with respect to the horizontal surface.

Meanwhile, the concentration cooling temperature is set in the range from 18°**C** to 22°**C.** The concentration cooling temperature may be set to 18°**C or lower.** The concentration cooling time may be set to 10 minutes or shorter. The concentration cooling temperature and the concentration cooling time are respectively set as a temperature and a time, at which a user's body temperature can be rapidly decreased through experiments.

Hereinafter, the operation of the air conditioner according to the first embodiment will be described in detail with reference to the accompanying drawing.

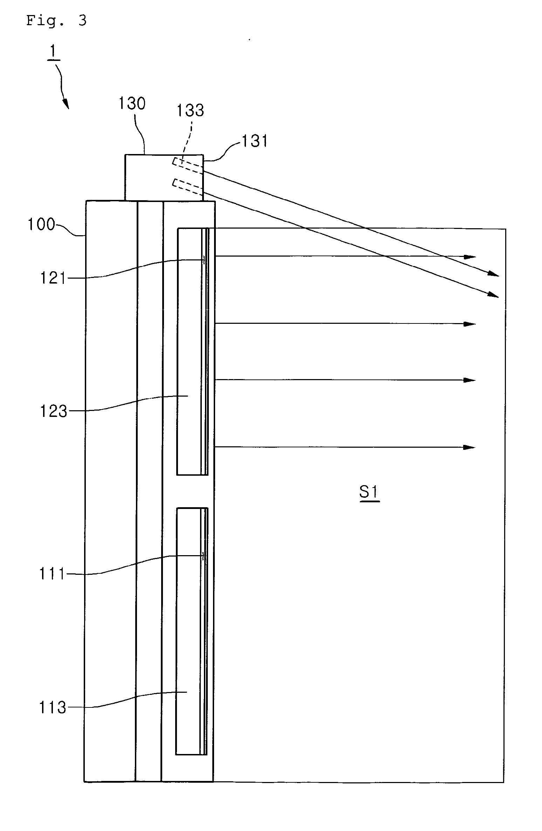

Fig. 3 is a side view showing an operational state of cooling in a concentration cooling mode in the air conditioner according to the first embodiment.

Referring to Fig. 3, if a user inputs a signal for selecting a concentration cooling mode to the input unit 150, the control unit 170 controls the indoor unit 1 so that the concentration cooling mode is performed. Thus, the air blowing fan 143 is operated, and air sucked into the interior of the cabinet 100 through the inlets 111 is heat-exchanged by the indoor heat exchanger 141 under the operation of the air blowing fan 143, thereby forming cool air. Then, the cool air formed as described above is blown out to the indoor space through the side outlets 121 and the front outlet 131 under the continuous operation of the air blowing fan 143.

The controller 170 controls the side air-direction control members 123 and the front air-direction control member 133 so that the cool air blown out through the side outlets 121 and the front outlet 131 is directed to the concentration cooling space S1. In this instance, the user is substantially positioned in the concentration cooling space S1.

More specifically, the control unit 170 controls the side air-direction control member 123 to control the cool air blown out through the side outlet 121 to be directed in the front direction of the cabinet 100 at an angle of 90 degrees or less from the front of the cabinet 100. The control unit 170 also controls the front air-direction control member 133 to control the cool air blown out through the front outlet 131 so that the cool air flows at an angle of 20 degrees or greater with respect to the horizontal surface.

As described above, the cool air blown out through the side outlets 121 and the front outlet 131 is controlled to be directed to the concentration cooling space S1, so that the user positioned in the concentration cooling space S1 comes in contact with the cool air. Thus, the user's body temperature is rapidly decreased, so that the user can more effectively feel comfortable.

The following table 1 shows changes in user's body temperature in the general cooling mode and the concentration cooling mode according to the first embodiment in the state that the user is positioned in the concentration cooling space S1.

**[Table 1]**

| Cooling Mode | General Cooling Mode | | Concentration cooling mode | |
|---|---|---|---|---|
| Time (min) | 5 | 10 | 5 | 10 |
| Decrease of Body Temperature (°**C**) | -2.1 | -2.9 | -2.0 | -3.8 |

Here, the decrease in body temperature refers to an average value of decreases in body temperature, sensed from individual parts of body, i.e., forehead, abdomen, arms, hands, femoral region, leg region and feet. That is, as can be seen in Table 1, in the concentration cooling mode, the user's body temperature is more rapidly decreased in the concentration cooling space S1 as compared with the general cooling mode. Thus, the user's body temperature is sufficiently decreased even after the operation of the indoor unit 1 has just started or after the user has just entered into the indoor space, so that the user can feel more comfortable.

Meanwhile, if the user inputs a signal for ending the concentration cooling mode to the input unit 150 or a predetermined concentration cooling time elapses, the control unit 170 ends the concentration cooling mode. If the concentration cooling mode is ended, the control unit 170 controls the indoor unit 1 so that the general cooling mode is performed.

Hereinafter, an air conditioner according to a second embodiment will be described in detail with reference to the accompanying drawings.

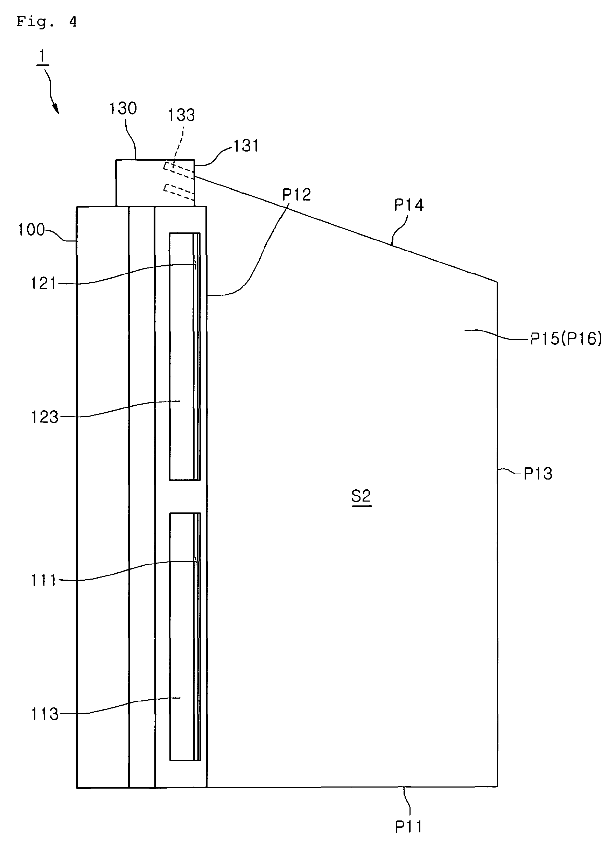

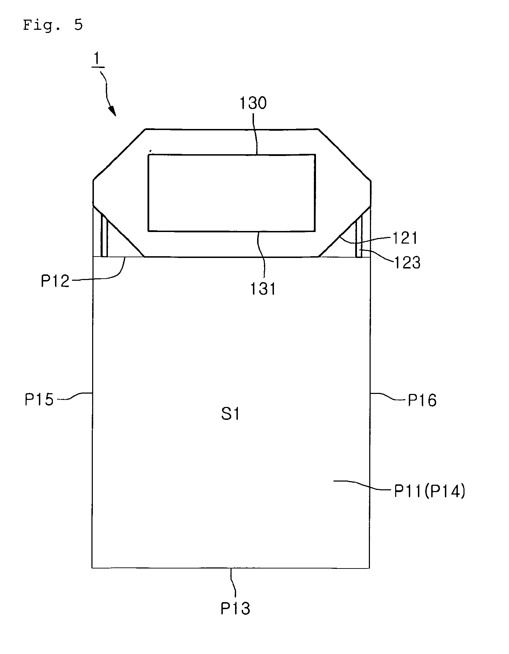

Fig. 4 is a side view showing an indoor unit in an air conditioner according to a second embodiment. Fig. 5 is a plan view showing the indoor unit in the air conditioner according to the second embodiment. Among components of this embodiment, components identical to those of the first embodiment are designated by the same reference numerals in Figs. 1 to 3, and their detailed descriptions will be omitted.

Referring to Figs. 4 and 5, in this embodiment, a concentration cooling space S2 is formed by a bottom surface P11 (hereinafter, referred to as an 'eleventh plane') on which the cabinet 100 is mounted, a imaginary plane P12 (hereinafter, referred to as a 'twelfth plane') including the front of the cabinet 100, a vertical surface P13 (hereinafter, referred to as a 'thirteenth plane') parallel to the front of the cabinet 100 while being spaced apart at a distance of 1.5m or shorter from the front of the cabinet 100, a imaginary plane P14 (hereinafter, referred to as a 'fourteenth plane') extending from the front outlet 131 away from the front side of the cabinet at an angle of 20 degrees or less from the horizontal surface, and imaginary planes P15 and P16 (hereinafter, referred to as 'fifteenth and sixteenth planes') extending from the rear ends of both the sides of the cabinet 100 in the front direction of the cabinet 100 at an angle of 90 degrees or less from the front side of the cabinet 100. The thirteenth plane P13 may be spaced apart at a distance of 1.2 m from the front of the cabinet 100, and the fourteenth plane P14 may extend downward from the front outlet 131 at an inclined angle of 20 degrees from the horizontal surface in the front direction of the cabinet 100. The fifteenth and sixteenth planes P15 and P16 may extend from the rear ends of both the sides of the cabinet 100 at an angle of 90 degrees from the front of the cabinet, i.e., to be parallel with the vertical surface perpendicular to the front of the cabinet 100.

Hereinafter, an air conditioner according to a third embodiment will be described in detail with reference to the accompanying drawing.

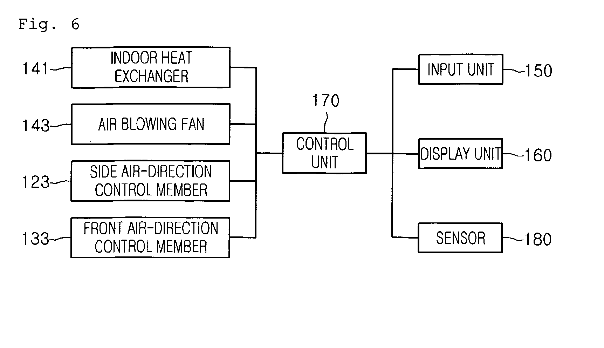

Fig. 6 is a block diagram schematically showing an air conditioner according to a third embodiment. Among components of this embodiment, components identical to those of the first embodiment are designated by the same reference numerals in Figs. 1 to 3, and their detailed descriptions will be omitted.

Referring to Fig. 6, in this embodiment, the indoor unit 1 further includes a sensor 180. The sensor 180 senses whether or not the user is positioned in the concentration cooling space S1 or S2 (see Figs. 1 to 5). If the sensor 180 senses that the user is positioned in the concentration cooling space S1 or S2, the controller 170 controls the indoor unit 1 so that the concentration cooling mode is performed. If the sensor 180 senses that the user is not positioned in the concentration cooling space S1 or S2, the control unit 170 controls the indoor unit 1 so that the concentration cooling mode is ended.

That is, in this embodiment, although the user does not input a signal for the concentration cooling mode to the input unit 150, the concentration cooling mode is performed when the user is positioned in the concentration cooling space S1 or S2. Thus, the concentration cooling mode can be more conveniently performed.

As described above, according to the air conditioner of the embodiments, the following effects can be attained.

A concentration cooling mode in which cool air is directly blown out to a concentration cooling space can be performed by a selection of a user. Thus, the body temperature of a user can be rapidly decreased, and thus the user may feel comfortable.

In addition, concentration cooling can be performed in a concentration cooling space according to whether a position of a user is detected in the concentration cooling space by a sensor. Thus, the body temperature of a user can be decreased more conveniently and rapidly, and thus the user may feel comfortable.

Although embodiments have been described with reference to a number of illustrative embodiments thereof, it should be understood that numerous other modifications and embodiments can be devised by those skilled in the art that will fall within the scope of the appended claims.

## Claims

1. An air conditioner comprising:
a cabinet (100) comprising a heat exchanger (141) configured to exchange heat with indoor air to cool the indoor air for cooling an indoor space;
an upper outlet unit (130) disposed on a upper portion of a front side of the cabinet or a top of the cabinet, the upper outlet unit comprising a first outlet at a front side; and
a first air-direction control member configured to control a direction of cool air blown out through the first outlet,
wherein in a concentration cooling mode for cooling at least a portion of the indoor space set as a concentration cooling space (S1) to a predetermined concentration cooling temperature, the first air-direction control member controls the cool air blown out through the first outlet to be directed to the concentration cooling space,
**characterized in that** the air conditioner further comprises:
second outlets (121) disposed on both sides of the cabinet (100) and inclined toward a rear side of the cabinet at a predetermined angle from front side of the cabinet; and
second air-direction control members (123) configured to control directions of cool air blown out through the second outlets,
wherein in the concentration cooling mode, the second air-direction control members control the cool air blown out through the second outlets to be directed toward the concentration cooling space (S1).

2. The air conditioner according to claim 1, wherein a rear surface of the concentration cooling space (S1) is spaced a distance of 1.5 m or less from the front side of the cabinet (100), and
a top surface of the concentration cooling space is spaced a distance of 2.0 m or less from a bottom surface on which the cabinet (100) is disposed.

3. The air conditioner according to claim 1, wherein a rear surface of the concentration cooling space (S1) is spaced a distance of 1.2 m or less from the front side of the cabinet (100),
a top surface of the concentration cooling space is spaced a distance of 1.1 m to 1.8 m from a bottom surface on which the cabinet is disposed.

4. The air conditioner according to any one of claims 1 to 3, further comprising an input unit (150) configured to receive a signal for selecting the concentration cooling mode and a signal for selecting a general cooling mode for cooling the indoor space entirely,
wherein the concentration cooling mode is started or ended when a signal for starting or ending the concentration cooling mode is inputted through the input unit.

5. The air conditioner according to any one of claims 1 to 3, further comprising an input unit configured to receive a signal for selecting the concentration cooling mode and a signal for selecting a general cooling mode for cooling of the indoor space entirely,
wherein the concentration cooling mode is started when a signal for starting the concentration cooling mode is inputted through the input unit and is ended after a predetermined concentration cooling time from the start of the concentration cooling mode.

6. The air conditioner according to claim 5, wherein the predetermined concentration cooling time is set equal to or less than 10 minutes.

7. The air conditioner according to any one of claims 4 to 6, wherein the general cooling mode is started when the concentration cooling mode is ended.

8. The air conditioner according to any one of claims 1 to 7, wherein the concentration cooling temperature is set in a range from 18°C to 22°C.

9. The air conditioner according to any one of claims 1 to 8, wherein in the concentration cooling mode, the first air-direction control member controls the cool air blown out through the first outlet to be directed away from the front side of the cabinet (100) at an angel equal to or greater than 20 degrees from a horizontal surface.

10. The air conditioner according to claim 1, wherein in the concentration cooling mode, the second air-direction control members control the cool air blown out through the second outlets to be directed away from the front side of the cabinet (100) at an angle equal to or less than 90 degrees from the front side of the cabinet.

11. The air conditioner according to claim 1, wherein the concentration cooling space (S1) is positioned in a virtual space formed by: the front side of the cabinet; a virtual vertical surface parallel to the front side of the cabinet and spaced from the front side of the cabinet by a distance of equal to or less than 1.5 m; a virtual inclination surface extending downward from the first outlet away from the front side of the cabinet at an angle equal to or less than 20 degrees from the horizontal surface; and virtual inclination surfaces extending from rear ends of both the sides of the cabinet away from the front side of the cabinet at an angle equal to or less than 90 degrees from the front side of the cabinet.

12. The air conditioner according to any one of claims 1 to 11, further comprising a sensor (180) configured to sense whether a user exists in the concentration cooling space.

13. The air conditioner according to claim 12, wherein the concentration cooling mode is started if the sensor (180) senses a user in the concentration cooling space (S1).

14. The air conditioner according to claim 12 or 13, wherein the concentration cooling mode is ended after predetermined concentration cooling time or if the sensor senses no user in the concentration cooling space.

## Patentansprüche

1. Klimaanlage, die aufweist:
einen Kasten (100), der einen Wärmetauscher (141) aufweist, der aufgebaut ist, um Wärme mit Innenluft auszutauschen, um die Innenluft für das Kühlen eines Innenraums zu kühlen;
eine obere Auslasseinheit (130), die auf einem oberen Abschnitt einer Vorderseite des Kastens oder einer Oberseite des Kastens angeordnet ist, wobei die obere Auslasseinheit einen ersten Auslass auf einer Vorderseite aufweist; und
ein erstes Luftrichtungssteuerelement, das aufgebaut ist, um eine Richtung von kühler Luft, die durch den ersten Auslass ausgeblasen wird, zu steuern,
wobei das erste Luftrichtungssteuerelement in einer Konzentrationskühlbetriebsart zum Kühlen wenigstens eines Abschnitts des Innenraums, der als ein Konzentrationskühlraum (S1) festgelegt ist, auf eine vorgegebene Konzentrationskühltemperatur die durch den ersten Auslass ausgeblasene kühle Luft derart steuert, dass sie zu dem Konzentrationskühlraum geleitet wird,
**dadurch gekennzeichnet, dass** die Klimaanlage ferner aufweist:
zweite Auslässe (121), die auf beiden Seiten des Kastens (100) angeordnet sind und in einem vorgegebenen Winkel von der Vorderseite des Kastens in Richtung einer Rückseite des Kastens geneigt sind; und
zweite Luftrichtungssteuerelemente (123), die aufgebaut sind, um Richtungen von kühler Luft, die durch die zweiten Auslässe ausgeblasen wird, zu steuern,
wobei die zweiten Luftrichtungssteuerelemente in der Konzentrationskühlbetriebsart die durch die zweiten Auslässe ausgeblasene kühle Luft derart steuern, dass sie in Richtung des Konzentrationskühlraums (S1) geleitet werden.

2. Klimaanlage nach Anspruch 1, wobei eine hintere Oberfläche des Konzentrationskühlraums (S1) um einen Abstand von 1,5 m oder weniger von der Vorderseite des Kastens (100) beabstandet ist, und
eine obere Oberfläche des Konzentrationskühlraums um einen Abstand von 2,0 m oder weniger von einer unteren Oberfläche, auf der der Kasten (100) angeordnet ist, beabstandet ist.

3. Klimaanlage nach Anspruch 1, wobei eine hintere Oberfläche des Konzentrationskühlraums (S1) um einen Abstand von 1,2 m oder weniger von der Vorderseite des Kastens (100) beabstandet ist,
eine obere Oberfläche des Konzentrationskühlraums um einen Abstand von 1,1 m bis 1,8 m von einer unteren Oberfläche, auf der der Kasten angeordnet ist, beabstandet ist.

4. Klimaanlage nach einem der Ansprüche 1 bis 3, die ferner eine Eingabeeinheit (150) aufweist, die aufgebaut ist, um ein Signal zum Auswählen der Konzentrationskühlbetriebsart und ein Signal zum Auswählen einer allgemeinen Kühlbetriebsart zum Kühlen des gesamten Innenraums zu empfangen,
wobei die Konzentrationskühlbetriebsart begonnen oder beendet wird, wenn durch die Eingabeeinheit ein Signal für den Beginn oder das Ende der Konzentrationskühlbetriebsart eingegeben wird.

5. Klimaanlage nach einem der Ansprüche 1 bis 3, die ferner eine Eingabeeinheit aufweist, die aufgebaut ist, um ein Signal zum Auswählen der Konzentrationskühlbetriebsart und ein Signal zum Auswählen einer allgemeinen Kühlbetriebsart zum Kühlen des gesamten Innenraums zu empfangen,
wobei die Konzentrationskühlbetriebsart begonnen wird, wenn durch die Eingabeeinheit ein Signal für den Beginn der Konzentrationskühlbetriebsart eingegeben wird, und nach einer vorgegebenen Konzentrationskühlzeit ab dem Beginn der Konzentrationskühlbetriebsart beendet wird.

6. Klimaanlage nach Anspruch 5, wobei die vorgegeben Konzentrationskühlzeit kleiner oder gleich 10 Minuten festgelegt ist.

7. Klimaanlage nach einem der Ansprüche 4 bis 6, wobei die allgemeine Kühlbetriebsart begonnen wird, wenn die Konzentrationskühlbetriebsart beendet wird.

8. Klimaanlage nach einem der Ansprüche 1 bis 7, wobei die Konzentrationskühltemperatur in einem Bereich von 18°C bis 22°C festgelegt wird.

9. Klimaanlage nach einem der Ansprüche 1 bis 8, wobei das erste Luftrichtungssteuerelement in der Konzentrationskühlbetriebsart die durch den ersten Auslass ausgeblasene kühle Luft derart steuert, dass sie in einem Winkel größer oder gleich 20 Grad von einer horizontalen Oberfläche von der Vorderseite des Kastens (100) weg geleitet wird.

10. Klimaanlage nach Anspruch 1, wobei die zweiten Luftrichtungssteuerelemente in der Konzentrationskühlbetriebsart die durch die zweiten Auslässe ausgeblasene kühle Luft derart steuern, dass sie in einem Winkel kleiner oder gleich 90 Grad von der Vorderseite des Kastens von der Vorderseite des Kastens (100) weg geleitet wird.

11. Klimaanlage nach Anspruch 1, wobei der Konzentrationskühlraum (S1) in einem virtuellen Raum positioniert ist, der ausgebildet ist durch: die Vorderseite des Kastens; eine virtuelle vertikale Oberfläche, die parallel zu der Vorderseite des Kastens und um einen Abstand von kleiner oder gleich 1,5 m von der Vorderseite des Kastens beabstandet ist; eine virtuelle Neigungsoberfläche, die sich in einem Winkel kleiner oder gleich 20 Grad zu der horizontalen Oberfläche von dem ersten Auslass von der Vorderseite des Kastens weg nach unten erstreckt; und virtuelle Neigungsoberflächen, die sich in einem Winkel kleiner oder gleich 90 Grad zu der Vorderseite des Kastens von hinteren Enden beider Seiten des Kastens von der Vorderseite des Kastens weg erstrecken.

12. Klimaanlage nach einem der Ansprüche 1 bis 11, die ferner einen Sensor (180) aufweist, der aufgebaut ist, um abzutasten, ob ein Nutzer in dem Konzentrationskühlraum vorhanden ist.

13. Klimaanlage nach Anspruch 12, wobei die Konzentrationskühlbetriebsart begonnen wird, wenn der Sensor (180) einen Nutzer in dem Konzentrationskühlraum (S1) abtastet.

14. Klimaanlage nach Anspruch 12 oder 13, wobei die Konzentrationskühlbetriebsart nach der vorgegebenen Konzentrationskühlzeit oder wenn der Sensor keinen Nutzer in dem Konzentrationskühlraum abtastet, beendet wird.

## Revendications

1. Climatiseur comprenant :
un boîtier (100) comprenant un échangeur de chaleur (141) configuré pour échanger de la chaleur avec l'air intérieur pour refroidir l'air intérieur permettant de refroidir un espace intérieur ;
une unité de refoulement supérieure (130) disposée sur une portion supérieure d'un côté avant du boîtier ou un dessus du boîtier, l'unité de refoulement supérieure comprenant un premier refoulement d'un côté avant ; et
un premier organe de régulation de direction d'air configuré pour réguler une direction d'air frais soufflé par le premier refoulement,
dans lequel dans un mode de refroidissement de concentration permettant de refroidir au moins une portion de l'espace intérieur établie comme un espace de refroidissement de concentration (S1) à une température de refroidissement de concentration prédéterminée, le premier organe de régulation de direction d'air régule l'air frais soufflé par le premier refoulement pour le diriger vers l'espace de refroidissement de concentration,
**caractérisé en ce que** le climatiseur comprend en outre :
des deuxièmes refoulements (121) disposés sur les deux côtés du boîtier (100) et inclinés vers un côté arrière du boîtier à un angle prédéterminé du côté avant du boîtier ; et
des deuxièmes organes de régulation de direction d'air (123) configurés pour réguler des directions d'air frais soufflé par les deuxièmes refoulements,
dans lequel dans le mode de refroidissement de concentration, les deuxièmes organes de régulation de direction d'air régulent l'air frais soufflé par les deuxièmes refoulements pour le diriger vers l'espace de refroidissement de concentration (S1).

2. Climatiseur selon la revendication 1, dans lequel une surface arrière de l'espace de refroidissement de concentration (S1) est espacée d'une distance de 1,5 m ou moins du côté avant du boîtier (100), et
une surface de dessus de l'espace de refroidissement de concentration est espacée d'une distance de 2,0 m ou moins d'une surface de fond sur laquelle le boîtier (100) est disposé.

3. Climatiseur selon la revendication 1, dans lequel une surface arrière de l'espace de refroidissement de concentration (S1) est espacée d'une distance de 1,2 m ou moins du côté avant du boîtier (100),
une surface de dessus de l'espace de refroidissement de concentration est espacée d'une distance de 1,1 m à 1,8 m d'une surface de fond sur laquelle le boîtier est disposé.

4. Climatiseur selon l'une quelconque des revendications 1 à 3, comprenant en outre une unité d'entrée (150) configurée pour recevoir un signal permettant de sélectionner le mode de refroidissement de concentration et un signal permettant de sélectionner un mode de refroidissement général permettant de refroidir totalement l'espace intérieur,
dans lequel le mode de refroidissement de concentration démarre ou s'achève lorsqu'un signal permettant de démarrer ou d'achever le mode de refroidissement de concentration est entré par l'unité d'entrée.

5. Climatiseur selon l'une quelconque des revendications 1 à 3, comprenant en outre une unité d'entrée configurée pour recevoir un signal permettant de sélectionner le mode de refroidissement de concentration et un signal permettant de sélectionner un mode de refroidissement général permettant de refroidir totalement l'espace intérieur, dans lequel le mode de refroidissement de concentration démarre lorsqu'un signal permettant de démarrer le mode de refroidissement de concentration est entré par l'unité d'entrée et s'achève après un temps de refroidissement de concentration prédéterminé depuis le démarrage du mode de refroidissement de concentration.

6. Climatiseur selon la revendication 5, dans lequel le temps de refroidissement de concentration prédéterminé est établi inférieur ou égal à 10 minutes.

7. Climatiseur selon l'une quelconque des revendications 4 à 6, dans lequel le mode de refroidissement général démarre lorsque le mode de refroidissement de concentration s'est achevé.

8. Climatiseur selon l'une quelconque des revendications 1 à 7, dans lequel la température de refroidissement de concentration est établie dans une plage de 18 °C à 22 °C.

9. Climatiseur selon l'une quelconque des revendications 1 à 8, dans lequel dans le mode de refroidissement de concentration, le premier organe de régulation de direction d'air régule l'air frais soufflé par le premier refoulement pour le diriger en éloignement du côté avant du boîtier (100) à un angle supérieur ou égal à 20 degrés par rapport à une surface horizontale.

10. Climatiseur selon la revendication 1, dans lequel dans le mode de refroidissement de concentration, les deuxièmes organes de régulation de direction d'air régulent l'air frais soufflé par les deuxièmes refoulements pour le diriger en éloignement du côté avant du boîtier (100) à un angle inférieur ou égal à 90 degrés du côté avant du boîtier.

11. Climatiseur selon la revendication 1, dans lequel l'espace de refroidissement de concentration (S1) est positionné dans un espace virtuel formé par : le côté avant du boîtier ; une surface verticale virtuelle parallèle au côté avant du boîtier et espacée du côté avant du boîtier d'une distance inférieure ou égale à 1,5 m ; une surface d'inclinaison virtuelle s'étendant vers le bas à partir du premier refoulement en éloignement du côté avant du boîtier à un angle inférieur ou égal à 20 degrés par rapport à la surface horizontale ; et de surfaces d'inclinaison virtuelles s'étendant depuis des extrémités arrière des deux côtés du boîtier en éloignement du côté avant du boîtier à un angle inférieur ou égal à 90 degrés par rapport au côté avant du boîtier.

12. Climatiseur selon l'une quelconque des revendications 1 à 11, comprenant en outre un capteur (180) configuré pour détecter si un utilisateur se trouve dans l'espace de refroidissement de concentration.

13. Climatiseur selon la revendication 12, dans lequel le mode de refroidissement de concentration démarre si le capteur (180) détecte un utilisateur dans l'espace de refroidissement de concentration (S1).

14. Climatiseur selon la revendication 12 ou 13, dans lequel le mode de refroidissement de concentration s'achève après un temps de refroidissement de concentration prédéterminé ou si le capteur ne détecte aucun utilisateur dans l'espace de refroidissement de concentration.
